# EUROPEAN PATENT APPLICATION

(11) **EP 4 387 255 A1**
(43) Date of publication of application: **19.06.2024**
(21) Application number: 23214866.8
(22) Date of filing: 07.12.2023
(51) Int. Cl.: H04N 23/67, H04N 25/531, G06V 20/56, G06V 20/58

(54) **FOCAL ADJUSTMENT OF AN AUTOMOTIVE CAMERA**

(30) Priority: 14.12.2022 DE 102022133187
(71) Applicant: Connaught Electronics Ltd., County Galway H54 Y276 (IE)
(72) Inventor: McDaid, H54 Y276, Tuam, H54 Y276 (IE)
(74) Representative: Jauregui Urbahn, Kristian

(57) **Abstract**

For focal adjustment of a camera (3), a first image is captured during a first frame period (F₁), wherein a plurality of rows (P) of a sensor array (11) is exposed according to a rolling shutter mode, and a second image is captured after the first frame period (F₁). An area on the sensor array (11) is determined, which corresponds to a region of interest (6a, 6b, 6c, 7a, 7b, 7c), a subset (P₁) of the plurality of rows (P) is determined, which contains the area, a focal adjustment period (Ta) is determined, which starts when or after all rows of the subset (P₁) have been exposed. At least one focal parameter is adjusted during the focal adjustment period (Ta) according to a predefined focal setting.

## Description

The present invention is directed to a method for focal adjustment of an automotive camera, wherein a first image is captured by an imager of the camera during a first frame period, wherein a plurality of rows of a sensor array of the imager is exposed according to a rolling shutter mode. A second image is captured by the imager during a second frame period after the first frame period. The invention is further directed to a corresponding automotive camera, to an electronic vehicle guidance system comprising an automotive camera and to a computer program product.

In photography or other applications of cameras, the term focusing refers to the adjustment of the respective camera settings and/or lens settings to the object distance so that the object to be depicted or a certain part of the environment to be depicted is in focus. This kind of adjustment is also denoted as focus adjustment or focal adjustment in the following.

In the context of automotive applications of cameras, image streams or video streams comprising a plurality of consecutive camera images according to consecutive frames may be captured and displayed and/or processed to realize various driver assistance functions or other functions for guiding a vehicle automatically or partially automatically. The corresponding frame rate may for example lay in the order of several frames or several tens of frames per second, fps. Typically, frame rates between 15 fps and 60 fps may be used.

In automotive applications, dynamically changing the focal settings of the camera may be beneficial in various cases. For example, for different functions, objects at different distances from the camera may be typically relevant. For example, for a driver assistance function assisting the driver of a vehicle at backwards driving, for example for parking the vehicle, close lying objects may be most relevant, whereas for computer vision algorithms detecting other vehicles, pedestrians or further traffic users in the environment, the most relevant objects may be typically located farther away from the camera.

Adjusting the focal settings while the sensor array of the imager is being exposed can lead to unwanted effects and reduce the image quality of the corresponding image.

Furthermore, adjusting the relevant focal parameters of the camera requires some time. There are different methods known how to achieve focal adjustments in general. In principle, the position of the object-side principal plane of the lens unit of the camera may be changed with respect to the image plane given by the surface of the sensor array. To this end, the sensor array or the whole imager may be moved physically with respect to the lens unit. Alternatively or in addition, optical parameters or properties of the lens unit may be changed by moving individual lenses of the lens unit with respect to each other or changing the shape of one or more lenses, for example by applying electrical voltages.

In digital cameras and, in particular, in automotive cameras, it is known to use electronic shutters rather than mechanical shutters, which are used for example for classical DSLR cameras. In case of an electronic shutter, the sensor pixels of the sensor array are electronically controlled such that only photo-electrons that are generated during a defined exposure period, also denoted as integration period, by light hitting the respective sensor pixel contribute to a cumulated charge or cumulated voltage being read out to determine the corresponding pixel value of the raw image. There is no mechanical component, however, ensuring that light will hit the pixel only during the exposure period as in case of a mechanical shutter.

On the one hand, an electronic shutter can be implemented as a global shutter. In this case, all sensor pixels of the sensor array are exposed at the same time. In other words, the exposure period starts at the same time and ends at the same time for all pixels of the sensor array. On the other hand, the electronic shutter can be implemented as a rolling shutter, wherein the sensor pixels of the sensor array are grouped into a plurality of rows, also denoted as lines, and the exposure period starts and ends at the same time for all sensor pixels of a given row. The exposure period for different rows, however, starts and ends at different times. For example, there may be a predefined temporal offset between the respective start of exposure for neighboring rows. Consequently, the exposure period starts one after the other for each of the plurality of rows and the exposure of the whole sensor array is completed when the last row has been exposed. For completeness it is noted that a rolling shutter may also be implemented mechanically.

Advantages of rolling shutters compared to global shutters comprise a simplified pixel architecture of the imager, since the rolling shutter principle requires less intermediate buffering of data and less complex readout electronics. Furthermore, the dissipated heat and the electronic noise are reduced and also thermal noise can be less than for a global shutter.

Document DE 10 2016 1240 89 A1 describes the use of a camera in a rolling shutter mode in a motor vehicle.

It is an objective of the present invention to provide a method for focal adjustment of an automotive camera operating in a rolling shutter mode, wherein negative effects of the focal adjustment on the captured images are avoided at least for a part of the images.

This objective is achieved by the respective subject matter of the independent claims. Further implementations and preferred embodiments are subject matter of the dependent claims.

The invention is based on the idea to use a predefined region of interest, ROI, and identify those rows of the sensor array, which is exposed row by row in the rolling shutter mode, which contain an area of the sensor array corresponding to the region of interest. A focal adjustment period during which the focal parameters are adjusted is then computed such that it begins after the region of interest has been captured. In other words, a specific part of the exposure period, which does not affect the region of interest, is used for adjusting the focal parameters.

According to an aspect of the invention, a method for focal adjustment of an automotive camera is provided. Therein, a first image is captured by an imager of the camera during a first frame period. For capturing the first image, a plurality of rows of a sensor array of the imager is exposed according to a rolling shutter mode, in particular a rolling shutter mode of the camera or the imager, respectively. A second image is captured by the imager during a second frame period after the first frame period. A first area on the sensor array is determined, in particular by at least one control unit of the automotive camera, wherein the first area corresponds to a predefined region of interest for the first frame period. A first subset of the plurality of rows is determined, in particular by the at least one control unit, wherein the first subset of rows contains the first area, in particular contains the first area completely. A focal adjustment period is determined, in particular computed, for example by the at least one control unit, wherein the focal adjustment period starts when or after all rows of the first subset of rows have been exposed for capturing the first image during the first frame period. At least one focal parameter of the camera is adjusted, in particular by a focal adjustment arrangement of the camera, which may to this end for example be controlled by the at least one control unit, during the focal adjustment period according to a predefined focal setting for capturing the second image.

The method for focal adjustment can also be denoted as a method for capturing at least the first and the second image, wherein a focal adjustment for capturing the second image is carried out.

An automotive camera may be considered as a camera suitable for being mounted to a vehicle, in particular a motor vehicle, such as a front camera, a rear camera, a side camera, et cetera. While the method according to the invention is carried out, the automotive camera is mounted to the vehicle.

The first frame period and the second frame period may for example correspond to two consecutive frames of an image stream or video stream generated by the camera. Consequently, the second frame period may begin immediately when the first frame period has ended. However, the exposure of the whole sensor array may be completed and/or data read out and for example data storage may be completed for the first image already before the first frame period ends.

The plurality of rows may correspond to the whole sensor array or in other words, the plurality of rows may comprise all sensor pixels of the sensor array. In other implementations, however, the plurality of rows may only contain a fraction of all sensor pixels of the sensor array, for example an upper half or lower half of the sensor array. This may be beneficial in terms of electronic control of the image capturing and/or read out. In both cases, however, the first subset is a real subset of the plurality of rows or, in other words, the first subset of rows does not contain all of the plurality of rows. In other words, the present method is applicable to situations, where at least one of the rows of the plurality of rows does not contain any pixels corresponding to the first area and, consequently, to the region of interest for the first frame period.

A region of interest, and in particular the region of interest for the first frame period, may here and in the following be considered as a three-dimensional volume in the environment of the camera, also denoted as real world, for example a cubic volume or a volume of cuboid shape or another three-dimensional volume. The points in the three-dimensional volume are then mapped in a predefined manner, which is in particular given by intrinsic parameters of the camera, to the two-dimensional surface of the sensor array. The sensor pixels on the sensor array to which the region of interest is mapped then correspond to a certain area on the sensor array, which is the first area in case of the region of interest for the first frame period. In particular, the region of interest is a connected three-dimensional volume and the first area is a connected portion on the surface of the sensor array. Alternatively, the region of interest, and in particular the region of interest for the first frame period, may be directly given as a connected two-dimensional region in image coordinates or, in other words, in coordinates on the surface of the sensor array. In this case, the region of interest for the first frame period is identical to the first area.

The sensor array is, in particular, a rectangular array of sensor pixels arranged in pixel rows and pixel columns, such that each sensor pixel is uniquely specified by a pixel row and a pixel column. Each of the rows associated to the rolling shutter mode or, in other words, the rows of the plurality of rows, may correspond to one or more neighboring or consecutive pixel rows or pixel columns. For example, a row of the plurality of rows may contain tens, hundreds or thousands of pixel rows or pixel columns.

In the following, it is assumed that a row of the plurality of rows corresponds to a number of pixel rows rather than pixel columns. However, all explanations are carried over analogously to the case that a row contains a number of pixel columns instead of pixel rows.

The length of the individual rows of the plurality of rows is equal to the length of the individual pixel rows. In other words, each row comprises sensor pixels of each of the pixel columns of the sensor array. Consequently, the first subset of rows, which contains the first area covers in general an area that is larger than the first area, since the latter does not necessarily contain sensor pixels of all pixel columns.

The first subset of rows may for example comprise only such rows of the plurality of rows, which do overlap the first area. In other words, the first subset of rows may be considered as a minimal subset of the plurality of rows, which contains the first area.

The imager may be understood as an electronic device comprising the sensor array, which corresponds to an array of optical detectors. A sensor pixel may be understood as one of the optical detectors or a group of two or more adjacent optical detectors. The sensor array may be designed as a CCD sensor, a CMOS sensor, in particular an active pixel sensor or a passive pixel sensor, or another sensor array, which is sensitive to light, in particular visible light. The imager may also comprise further electronic components in addition to the sensor array, for example for reading out the sensor array and/or preprocessing purposes et cetera. The imager may be implemented on a single semiconductor chip and may therefore also be denoted as imager chip. Alternatively, the sensor array and the further electronic components may be implemented on two or more different semiconductor chips, which may for example be mounted on a common circuit board. In particular, the imager may comprise one or more of the at least one control unit.

The at least one focal parameter depends on how the focal adjustment is actually carried out. For example, if the focal adjustment is carried out by adjusting a distance between the sensor array and a lens unit of the camera, the at least one focal parameter may comprise or consist of the distance between the sensor array and the lens unit. The at least one focal parameter may also comprise at least one control parameter for operating the focal adjustment arrangement or may comprise relative distance changes between the sensor array and the lens unit et cetera. The at least one focal parameter may also comprise a focal length of the lens unit, in case the focal length may be changed in order to carry out the focal adjustment. Also relative differences in the focal length may represent the at least one focal parameter. In general, the at least one focal parameter comprises one or more parameters, which directly or indirectly affect or change the distance between the image plane of the camera, which is given by a plane comprising the surface of the sensor array, to an object-side principal plane of the lens unit.

In particular, no focal adjustment, in particular no change of the at least one focal parameter of the camera, is carried out while the first subset of rows is being exposed or, in other words, after an initial row of the first subset has started to be exposed and before a final row of the first subset has been completely exposed.

The predefined focal setting for capturing the second image corresponds to a predefined set of values of the at least one focal parameter. It may be a focal setting for capturing the whole second image or for capturing a part of the second image.

In case of a mechanical shutter, the exposure happens when a mechanical component allows light from outside of the camera to enter the interior region of the camera through the lens unit and hitting the respective part of the sensor array. In case of an electronic shutter, the exposure may be understood as a period, during which the charge carriers generated by the corresponding sensor pixel due to impinging light contribute to a cumulated or integrated charge or voltage being read out from the sensor pixel to determine the respective pixel value. In other words, the exposure period corresponds to an integration time in this case.

The rolling shutter is preferably an electronic shutter. However, in principle, the method according to the invention may also be applied in case of a mechanical shutter. If not mentioned otherwise, it is assumed here and in the following that the rolling shutter is an electronic shutter.

In particular, the focal adjustment period starts before all rows of the plurality of rows have been exposed for capturing the first image during the first frame period. This is based on the assumption that the exposure of the first subset of rows is completed before the exposure of all rows of the plurality of rows is completed. The focal adjustment period starts between those two time instances.

In other words, assuming that the plurality of rows comprises a number of N consecutive rows labeled by 1, 2, ..., N, when capturing the first image, the plurality of rows is exposed such that first the exposure period of row 1 starts and the exposure period of row 2 starts after a predefined offset time or delay time after the exposure period of row 1 has started and so forth. At last, the exposure period of row N starts. In other words, the exposure period of row N is the last to start and the last to end. In a scenario in which the method according to the invention is carried out, the first subset of rows then does not contain row N. The method according to the invention can be understood such that it is applicable to situations when this assumption is valid.

The invention is not directed to the exceptional case that row N is also contained by the first subset of rows. In this case there may be different possibilities how to handle focal adjustment for capturing the second image. For example, the second frame period may intentionally be delayed until the focal parameters have been adjusted or the focal adjustment may be omitted or it may be accepted that the focal adjustment starts after all rows of the plurality of rows have been exposed.

According to the invention, it is ensured that the focal adjustment does not happen before all rows of the first subset have been exposed, while it is accepted that the focal adjustment happens while the remaining rows, which are not contained in the first subset, are being exposed. In other words, it is ensured that the mapping of the region of interest for the first frame period is not affected by the focal adjustment, while it is accepted that image regions outside of the region of interest for the first frame period are affected by the focal adjustment. In other words, subsequent vehicle functions making use of the first image can use the part of the first image which corresponds to the region of interest for the first frame period without any quality reductions due to the focal adjustment, while quality reductions outside of the region of interest for the first frame period are accepted and for example are not relevant for the corresponding function.

In some designs, there may be an intermediate time period after the last row of the plurality of rows, which has been denoted as row N above, has been exposed in the first frame period and before the first row of the plurality of rows, denoted as row 1 above, starts to be exposed. The focal adjustment period may comprise this intermediate time period. By means of the invention, however, the available time for performing the focal adjustment is increased beyond the intermediate time period, since the focal adjustment period starts already before the last row of the plurality of rows has been exposed. Consequently, the extent of focal adjustment that can be achieved in one step is increased. In other implementations, there may be no suitable intermediate time period between the end of exposure of the last row N in the first frame period and the start of exposure of the first row 1 in the second frame period. In this case, the invention nevertheless allows for a focal adjustment without negatively affecting the mapping of the region of interest for the first frame period.

According to several implementations of the method for focal adjustment according to the invention, the plurality of rows is exposed according to the rolling shutter mode for capturing the second image. A second area on the sensor array is determined, in particular by the at least one control unit, wherein the second area corresponds to a predefined region of interest for the second frame period. The focal adjustment period is determined depending on the second area.

The predefined focal setting for capturing the second image may correspond to a predefined focal setting for capturing the ROI for the second frame period.

The regions of interest for the first and the second frame period, respectively, may be identical to each other or different from each other. If they are identical, it follows also that the first area is identical to the second area. On the other hand, if the ROIs for the first and the second frame period are different, the first area may be different from the second area, in particular in case the regions of interest are defined as described above as respective three-dimensional volumes in the real world. However, also in case the ROls for the first and the second frame period are given by three-dimensional volumes in the real world and are different from each other, the first area can still be identical to the second area by chance, since different three-dimensional volumes may be mapped by the camera, in particular the lens unit, to the same area on the sensor array. In case the ROls for the first and the second frame period are directly given by two-dimensional parts of the surface of the sensor array and are different from each other, it follows that the first and the second area are different from each other.

According to several implementations, if the second area is identical to the first area, the focal adjustment period ends before an exposure of any of the first subset of rows for capturing the second image during the second frame period has started.

In other words, if the first area is identical to the second area, it is ensured that there is no focal adjustment happening in the second frame period after the exposure of the first subset of rows has started. In such cases, the first subset of rows does not only cover the ROI or mapped ROI for the first frame period, but also the ROI or mapped ROI for the second frame period. Nevertheless, the focal parameters or, in other words, the predefined focal setting for the second frame period differs, in general, from respective settings for the first frame period. In such implementations, it is achieved that imaging the ROI for the second frame period is not negatively affected by the focal adjustment.

For example, the focal adjustment period may end at a time instance when the exposure of the first subset of rows starts in the second time period. However, in alternative implementations, there may be a time difference between the end of the focal adjustment period and the start of exposure of the first subset of rows in the second frame period. The time difference may be equal to or greater than a predefined non-zero buffer period. The non-zero buffer period may for example account for a settling of the at least one focal parameter after adjustment. In this way, unwanted variations of the at least one focal parameter during the exposure of the first subset of rows in the second frame period can be avoided.

According to several implementations, if the second area is different from the first area, a second subset of the plurality of rows is determined, in particular by the at least one control unit. The second subset of rows contains the second area, in particular contains the second area completely. The focal adjustment period ends before any of the second subset of rows is exposed for capturing the second image during the second frame period.

The explanations above regarding the case when the first area is identical to the second area carry over analogously for the present case.

Also in such implementations, a time difference between the end of the focal adjustment period and a start of exposure of the second subset of rows may be present, which is equal to or greater than a predefined non-zero buffer period as explained above.

According to several implementations, the first subset of rows corresponds to a minimal set of rows of the plurality of rows containing the first area.

According to several implementations, if the second area is different from the first area, the second subset of rows corresponds to a further minimal set of rows of the plurality of rows containing the second area.

In this case, the available time for the focal adjustment period is maximized since the first subset of rows and, if applicable, the second subset of rows, contains only as many rows as actually required for covering the first or second area, respectively.

According to several implementations, adjusting the at least one focal parameter comprises changing a distance between the sensor array, in particular an image plane given by the plane comprising the surface of the sensor array, and an object-side principal plane of the camera, in particular of the lens unit.

According to several implementations, adjusting the at least one focal parameter comprises changing a distance between the sensor array, in particular the image plane, and the lens unit of the camera.

The lens unit comprises one or more lenses. For changing the distance between the sensor array and the lens unit, the lens unit and the sensor array are moved relative to each other. In particular, the lens unit may remain stationary while the sensor array is moved, for example the whole imager is moved, or the imager and the sensor array remain stationary while the lens unit, in particular the complete lens unit with all of the one or more lenses, is moved.

By changing the distance between the sensor array and the lens unit, in particular mechanically, the distance between the object-side principal plane of the lens unit and the image plane is changed accordingly.

According to several implementations, adjusting the at least one focal parameter comprises changing a focal length of the lens unit of the camera.

Also by changing the focal length, for example by changing optical properties of the one or more lenses or their relative position with respect to each other or their shape, the position of the object-side principal plane with respect to the image plane is changed.

In some implementations, adjusting the at least one focal parameter comprises changing the distance between the sensor array and the lens unit and also comprises changing the focal length of the lens unit.

According to a further aspect of the invention, a method for guiding a vehicle, in particular a motor vehicle, at least in part automatically is provided. Therein, the vehicle comprises an automotive camera and a method for focal adjustment of the automotive camera is carried out according to the invention. The vehicle is guided at least in part automatically depending on the first image and/or the second image.

For guiding the vehicle at least in part automatically, one or more computer vision functions may be carried out depending on the first and/or second image. A further control unit of the vehicle may generate at least one control signal for guiding the vehicle at least in part automatically depending on a result of the one or more computer vision functions. The one or more control signals may for example be provided to one or more actuators of the vehicle, which affect a lateral and/or longitudinal control of the vehicle depending on the one or more control signals in order to guide the vehicle at least in part automatically.

Alternatively or in addition, one or more human vision functions may be carried out depending on the first and/or second image. To this end, the first and/or second image may be displayed or first processed and then displayed on a display device of the vehicle to assist a driver of the vehicle for guiding the vehicle.

For use cases or use situations which may arise in the method and which are not explicitly described here, it may be provided that, in accordance with the method, an error message and/or a prompt for user feedback is output and/or a default setting and/or a predetermined initial state is set.

According to a further aspect of the invention, an automotive camera is provided. The automotive camera comprises an imager and, in particular, a lens unit. The automotive camera comprises at least one control unit, which is configured to control the imager to capture a first image during a first frame period, wherein a plurality of rows of a sensor array of the imager is exposed according to a rolling shutter mode, and to capture a second image during a second frame period after the first frame period. The automotive camera comprises a focal adjustment arrangement, which is configured to adjust at least one focal parameter of the camera. The at least one control unit is configured to determine a first area of the sensor array, which corresponds to a predefined region of interest for the first frame period, to determine a first subset of the plurality of rows, wherein the first subset of rows contains the first area, and to determine a focal adjustment period. The at least one control unit is configured to determine the focal adjustment period such that it starts when or after all rows of the first subset of rows have been exposed during the first frame period and, for example, before all rows of the plurality of rows have been exposed during the first frame period. The at least one control unit is configured to control the focal adjustment arrangement to adjust the at least one focal parameter of the camera during the focal adjustment period according to a predefined focal setting for capturing the second image.

A control unit of the at least one control unit may also be denoted as a respective computing unit. The at least one control unit may partially or fully be comprised by the imager or may be implemented separately from the imager.

A computing unit may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a nonvolatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

In order to control the focal adjustment arrangement, the at least one control unit may generate at least one focal control signal and provide it to the focal adjustment arrangement accordingly.

According to several implementations of the automotive camera according to the invention, the focal adjustment arrangement is configured to move the sensor array relative to a lens unit of the camera to adjust the at least one focal parameter.

According to several implementations, the focal adjustment arrangement is configured to change a focal length of a lens unit of the camera to adjust the at least one focal parameter.

Further implementations of the automotive camera according to the invention follow directly from the various embodiments of the method according to the invention and vice versa. In particular, individual features and corresponding explanations as well as advantages relating to the various implementations of the method according to the invention can be transferred analogously to corresponding implementations of the automotive camera according to the invention. In particular, the automotive camera according to the invention is designed or programmed to carry out the method according to the invention. In particular, the automotive camera according to the invention carries out the method according to the invention.

According to a further aspect of the invention, an electronic vehicle guidance system for a vehicle is provided. The electronic vehicle guidance system comprises an automotive camera according to the invention and a further control unit. The further control unit is configured to generate one or more control signals for guiding the vehicle at least in part automatically depending on the first image and/or the second image and/or to carry out a method for guiding a vehicle at least in part automatically according to the invention.

An electronic vehicle guidance system may be understood as an electronic system, configured to guide a vehicle in a fully automated or a fully autonomous manner and, in particular, without a manual intervention or control by a driver or user of the vehicle being necessary. The vehicle carries out all required functions, such as steering maneuvers, deceleration maneuvers and/or acceleration maneuvers as well as monitoring and recording the road traffic and corresponding reactions automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification. Here and in the following, SAE J3016 refers to the respective standard dated June 2018.

Guiding the vehicle at least in part automatically may therefore comprise guiding the vehicle according to a fully automatic or fully autonomous driving mode according to level 5 of the SAE J3016 classification. Guiding the vehicle at least in part automatically may also comprise guiding the vehicle according to a partly automatic or partly autonomous driving mode according to levels 1 to 4 of the SAE J3016 classification.

According to a further aspect of the invention, a first computer program is provided, which comprises first instructions. When the first instructions are executed by an automotive camera according to the invention, for example by the at least one control unit, the first instructions cause the automotive camera to carry out a method for focal adjustment according to the invention.

According to a further aspect of the invention, a second computer program comprising second instructions is provided. When the second instructions are carried out by an electronic vehicle guidance system according to the invention, in particular by the at least one control unit of the automotive camera and/or the further control unit of the electronic vehicle guidance system, the second instructions cause the electronic vehicle guidance system to carry out a method for guiding a vehicle at least in part automatically according to the invention.

The first and/or second instructions may be provided as program code. The program code may for example be provided as binary code or assembler and/or as source code of a programming language, for example C, and/or as program script, for example Python.

According to a further aspect of the invention, a computer-readable storage device is provided. The computer-readable storage device stores a first computer program and/or a second computer program according to the invention.

The first computer program, the second computer program and the computer-readable storage device may be denoted as respective computer program products comprising the first and/or second instructions, respectively.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures:
- Fig. 1: shows schematically a vehicle with an exemplary implementation of an electronic vehicle guidance system according to the invention comprising an exemplary implementation of an automotive camera according to the invention;
- Fig. 2: shows schematically regions of interest in an environment of an automotive camera;
- Fig. 3: shows schematically further regions of interest in an environment of an automotive camera;
- Fig. 4: shows schematically a block diagram visualizing an exemplary implementation of a method for focal adjustment according to the invention;
- Fig. 5: shows schematically the exposure of a plurality of rows according to a rolling shutter mode in two consecutive frame periods according to an exemplary implementation of a method for focal adjustment according to the invention;
- Fig. 6: shows schematically the exposure of a plurality of rows according to a rolling shutter mode in two consecutive frame periods according to a further exemplary implementation of a method for focal adjustment according to the invention;
- Fig. 7: shows schematically the exposure of a plurality of rows according to a rolling shutter mode in two consecutive frame periods according to a further exemplary implementation of a method for focal adjustment according to the invention;
- Fig. 8: shows schematically a use case for applying a method for focal adjustment according to the invention in terms of a flow diagram;
- Fig. 9: shows schematically a further use case for applying a method for focal adjustment according to the invention in terms of a flow diagram;
- Fig. 10: shows schematically a further use case for applying a method for focal adjustment according to the invention in terms of a flow diagram; and
- Fig. 11: shows schematically a further use case for applying a method for focal adjustment according to the invention in terms of a flow diagram.

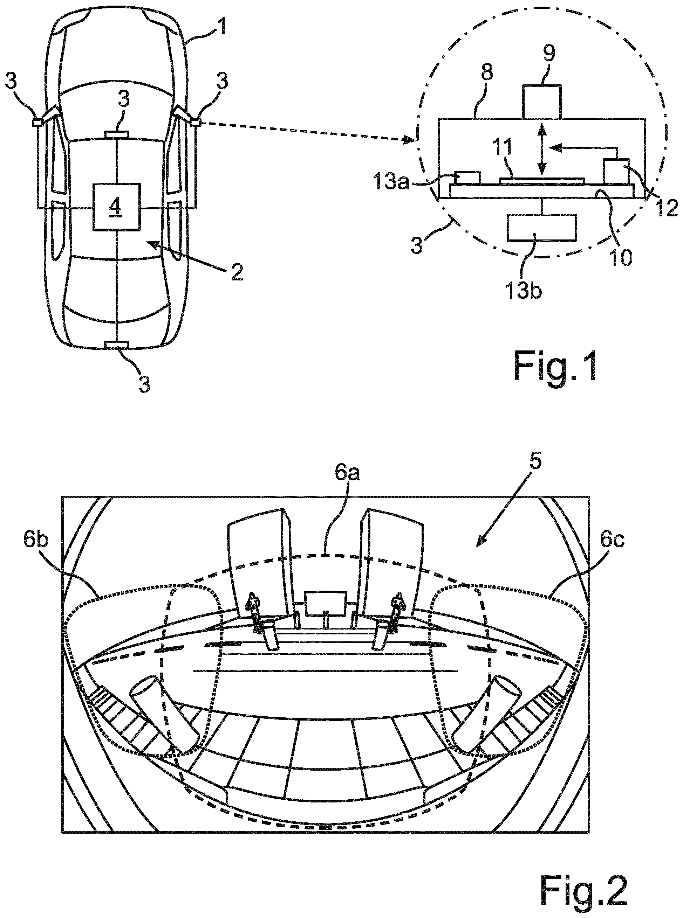

Fig. 1 shows schematically a vehicle 1, which comprises an electronic vehicle guidance system 2 according to the invention. The vehicle guidance system 2 comprises one or more cameras implemented as an automotive camera 3 according to an exemplary implementation of the invention. The automotive camera 3 is shown schematically as a block diagram in the inset of Fig. 1.

The automotive camera 3 comprises an imager 10, which is for example arranged inside a housing 8 of the camera 3. The automotive camera 3 also comprises a lens unit 9 containing one or more lenses (not shown). Furthermore, a sensor array 11 of the imager is arranged with respect to the lens unit 9 such that light passing through the lens unit 9 may hit a surface of the sensor array 11. The camera 3 comprises one or more control units 13a, 13b. The one or more control units 13a, 13b can be part of the imager 10 as shown for a control unit 13a in Fig. 1 or can be implemented in addition to the imager 10, as shown for a control unit 13b in Fig. 1.

Furthermore, the automotive camera 3 comprises a focal adjustment arrangement 12, which is controllable by the at least one control unit 13a, 13b to change at least one focal parameter or adjust at least one focal parameter of the camera 3. To this end, the focal adjustment arrangement may be controlled by the at least one control unit 13a, 13b to change a distance between the surface of the sensor array 11, which corresponds to an image plane of the camera, to an object-side principal plane of the lens unit 9. This may be achieved by moving the position of the sensor array 11 with respect to the position of the lens unit 9. For example, the imager 10 and the sensor array 11 may remain fixed while the position of the lens unit 9 may be changed by the focal adjustment arrangement or vice versa. Alternatively or in addition, the focal adjustment arrangement 12 may change optical properties, for example the focal length, of the lens unit electronically.

The electronic vehicle guidance system 2 may comprise a further control unit 4, which may for example be implemented as an electronic control unit, ECU, and is connected to the camera 3. The camera 3 is configured to generate a stream of camera images comprising at least a first image and a second image and provide the stream or a preprocessed version of the stream to the further control unit 4. The further control unit 4 may then generate one or more control signals for guiding the vehicle 1 at least in part automatically depending on the stream of camera images and provide the one or more control signals to respective actuators (not shown) of the vehicle, which affect a longitudinal and/or lateral control of the vehicle 1 depending on the one or more control signals.

In order to adjust the focal settings of the camera 3, the camera 3 is able to carry out a method for focal adjustment of an automotive camera according to the invention. Details of such method are explained in the following with reference to figures Fig. 2 to Fig. 7.

The at least one control unit 13a, 13b is configured to determine a first area on the sensor array 11 or, in other words a connected subset of pixels of the sensor array 11, which corresponds to a predefined region of interest 6a, 6b, 6c, 7a, 7b, 7c for a first frame period F₁, during which a first image is captured by the imager 10.

Fig. 2 shows schematically examples for three different regions of interest 6a, 6b, 6c in an environment 5 of the camera 3. The three different regions of interest 6a, 6b, 6c may be defined by different sizes and/or horizontal angles from the camera perspective. The regions of interest 6a, 6b, 6c may for example correspond to three-dimensional volumes in the environment 5, which are cuboid or approximately cuboid volumes. In case the camera 3 is a non-rectilinear camera, such as a fisheye camera, the straight lines or plane faces delimiting the cuboid volume are distorted as indicated in Fig. 2.

The different regions of interest 6a, 6b, 6c may for example be relevant for different functions of the electronic vehicle guidance system 2. The center region of interest 6a may for example be used for assisting a driver at backwards driving of the vehicle 1 by displaying a corresponding part of the images captured by the camera 3 on a display device (not shown) of the vehicle 1. On the other hand, the lateral regions of interest 6b, 6c may for example be used by a computer vision function, such as an object detection function, which is targeting at detecting other vehicles for example at a further distance from the vehicle 1. Consequently, it may be desirable to have different focal settings for the different ROIs 6a, 6b, 6c. The invention allows to use different frames of the image stream with different focal settings to toggle between the optimum settings for different ROIs for example. Each ROI 6a, 6b, 6c may be directly mapped to a corresponding area, which is a part of the surface of the sensor array 11.

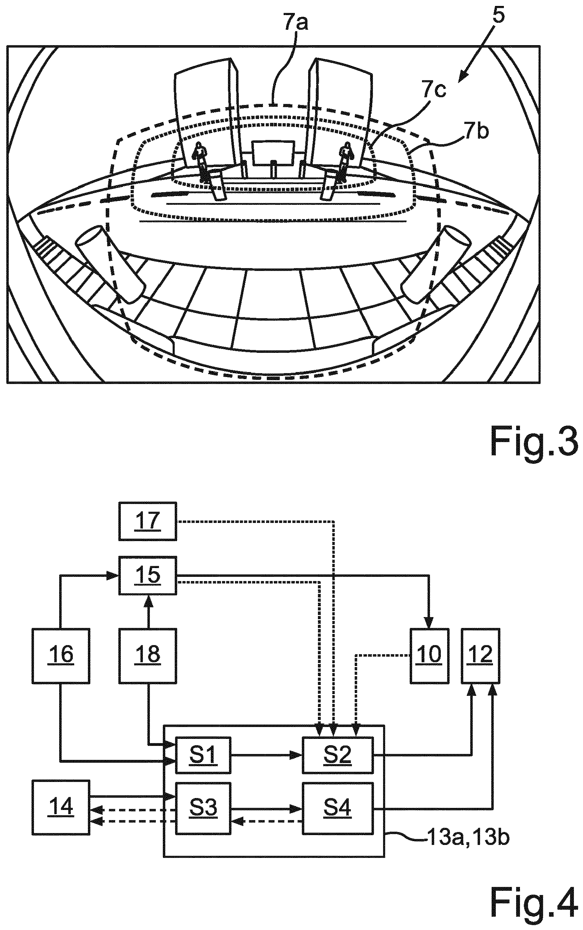

Fig. 3 shows further examples of different ROIs 7a, 7b, 7c in the environment 5 of the camera 3. In this example, the largest ROI 7a contains a smaller ROI 7b, which again contains an even smaller ROI 7c. For these ROIs 7a, 7b, 7c also different focal settings according to different expected distances of relevant objects in the environment 5 from the camera 3 may be desirable.

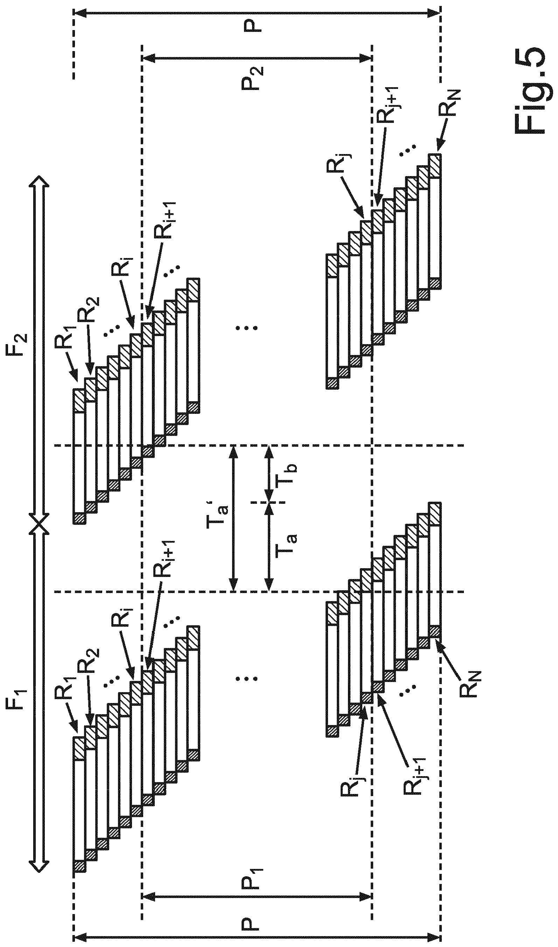

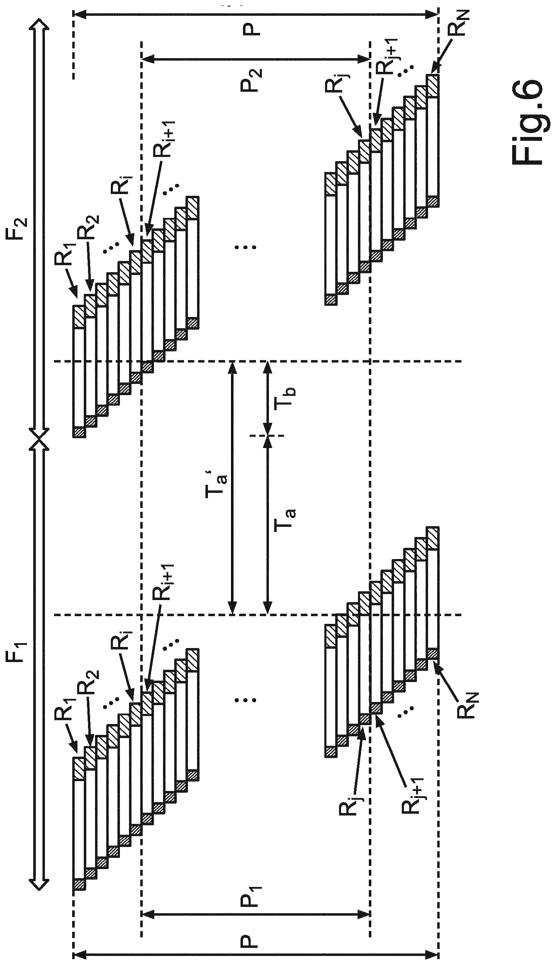

In the course of a method according to the invention, the at least one control unit 13a, 13b controls the imager 10 to capture a first image in a first frame period F₁, as shown schematically in Fig. 5 to Fig. 8. The camera 3 or, in other words, the imager 10 operates in a rolling shutter mode as indicated for example in Fig. 5. Therein, a plurality of rows P of the sensor array 11 is exposed as commonly known for rolling electronic shutters. For each of the rows R₁, R₂, ..., Rᵢ, Rᵢ₊₁, ..., Rⱼ, Rⱼ₊₁, ..., R_{N}, a reset period, during which the corresponding buffer is cleared, is followed by an exposure period or, in other words, integration period, and after the exposure period is finished, a respective read out period follows, wherein all pixels of the respective row are read out. The reset periods and the read out periods are represented by blocks with different shadings in Fig. 6, while the exposure periods are represented by blank blocks. As known for the rolling shutter principle, the individual exposure periods of neighboring rows are offset with respect to each other by a predefined offset time. In a second frame period F₂ after the first frame period F₁, the at least one control unit 13a, 13b controls the imager 10 to capture a second image in the same way by exposing the plurality of rows P according to the rolling shutter mode.

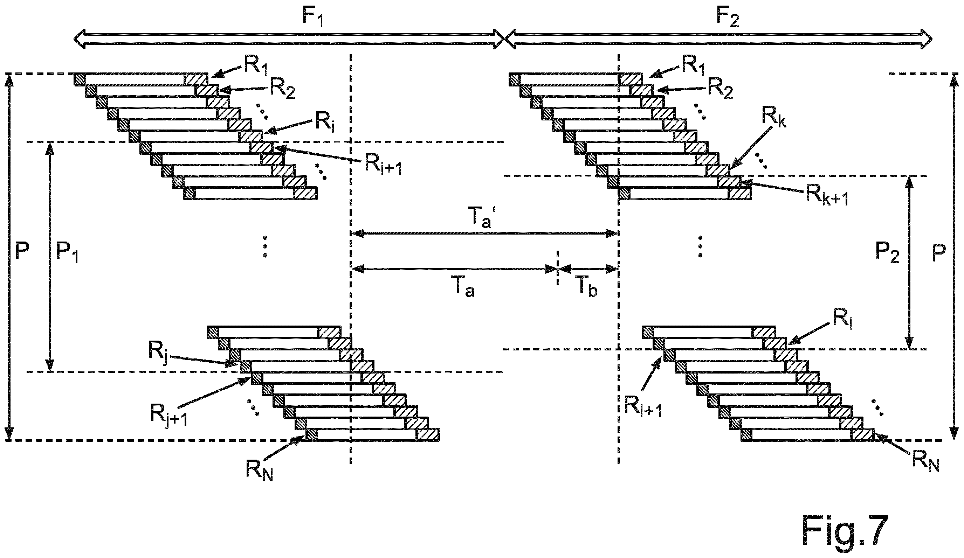

The at least one control unit 13a, 13b determines a first area on the sensor array 11, which corresponds to a predefined first ROI 6a, 6b, 6c, 7a, 7b, 7c for the first frame period F₁ and determines a first subset P₁ of the plurality of rows P, which contains the first area. In the example of Fig. 5, the rows R1 to Rᵢ as well as the rows Rⱼ₊₁ to R_{N} are not contained by the first subset P₁. The first subset P₁ comprises the rows Rᵢ₊₁ to Rⱼ. Analogously, the at least one control unit 13a, 13b may determine a second subset P₂ of the plurality of rows P, which contains a second area, wherein the second area corresponds to a predefined ROI 6a, 6b, 6c, 7a, 7b, 7c for the second frame period F₂. Therein, the ROI 6a, 6b, 6c, 7a, 7b, 7c for the first frame period F₁ may be identical or different from the ROI 6a, 6b, 6c, 7a, 7b, 7c for the second frame period F₂. Consequently, the first area may be identical to or different from the second area on the sensor array 11. In case the first area is identical to the second area, the first subset P₁ is identical to the second subset P₂, as shown schematically in Fig. 5. On the other hand, if the first area is different from the second area, the first subset P₁ may be different from the second subset P₂, as indicated schematically in Fig. 7. In this case, the first subset P₁ comprises the rows Rᵢ₊₁ to Rⱼ as described with respect to Fig. 7 and the second subset P₂ comprises the rows Rₖ₊₁ to Rₗ, wherein k ≠ I and/or I ≠ j.

In the example of Fig. 6 the first subset P₁ is identical to the second subset P₂ as explained for Fig. 5. In the example of Fig. 5, however, the exposure of the first row R₁ in the second frame period F₂ begins immediately after the exposure of the last row R_{N} in the first frame period F₁ has ended. In the examples of Fig. 6 and Fig. 7, on the other hand, there is an intermediate time period between the end of the exposure of the last row R_{N} in the first frame period F₁ and the begin of the exposure of the first row R₁ in the second frame period F₂.

The at least one control unit 13a, 13b determines a focal adjustment period Tₐ depending on the first subset P₁ and, in particular, depending on the second subset P₂ and controls the focal adjustment arrangement 12 to adjust the at least one focal parameter of the camera 3 during the focal adjustment period Tₐ according to a predefined focal setting for capturing the second image, in particular the ROI 6a, 6b, 6c, 7a, 7b, 7c for the second frame period F₂. Therein, the focal adjustment period Tₐ starts when or after all rows of the first subset of rows P₁ have been exposed, in the present example after the last row Rⱼ of the first subset P₁ has been exposed. Furthermore, the focal adjustment period Tₐ starts, in particular, before all rows of the plurality of rows P have been exposed during the first frame period F₁ or, in other words, in the present example before the last row R_{N} of the plurality of rows P has been exposed. Furthermore, the focal adjustment period Tₐ ends before any of the rows of the second subset P₂ is exposed during the second frame period F₂ or, in the present example of Fig. 5, before the first row Rᵢ₊₁ of the second subset P₂ is started being exposed. In the example of Fig. 7, the focal adjustment period Tₐ accordingly ends before the first row Rₖ₊₁ of the second subset P₂ is started to be exposed.

In other words, the maximum time period Tₐ' available for the focal adjustment is given by the time difference between the end of exposure of the last row of the first subset P₁, which is in the present examples row Rⱼ, and the beginning of the exposure of the first row of the second subset P₂, which is the row Rᵢ₊₁ in the examples of Fig. 5 and Fig. 6 and the row Rₖ₊₁ in the example of Fig. 7. However, in several implementations, the focal adjustment period Tₐ is shorter than the maximum available time period Tₐ' by a non-zero buffer period T_{b}. The buffer period T_{b} may correspond to or contain a period provided for settling the at least one focal parameter adjusted by the focal adjustment arrangement 12.

Fig. 4 shows a block diagram indicating schematically an exemplary implementation of a method for focal adjustment according to the invention. The reference signs S1, S2, S3, S4 correspond to respective method steps carried out by the at least one control unit 13a, 13b. In Step S1, the first subset P₁ and, optionally, the second subset P₂ of the plurality of rows P is computed. For computing the subsets P₁, P₂, the at least one control unit 13a, 13b may use the respective predefined intrinsic and extrinsic camera parameters 16 of the camera 3 and the predefined definition 18 of the ROIs 6a, 6b, 6c, 7a, 7b, 7c for the first and second frame period F₁, F₂. In Step S2, the focal adjustment period Tₐ is computed based on the first and second subset P₁, P₂. To this end, the at least one control unit 13a, 13b may use predefined imager configuration data 17 and/or predefined image quality data 15 obtained from an image quality manager circuit (not shown) of the camera 3, which defines respective settings for automatic white balance, image brightness et cetera. For computing the focal adjustment period Tₐ, the at least one control unit 13a, 13b may use alternatively or in addition exposure period signals on frame level or row level from the imager 10. It is noted that the at least one control unit 13a, 13b does not necessarily require all of the image quality data 15, the imager configuration data 17 and the exposure period signals from the imager 10. For the at least one control unit 13a, 13b, 13c, it is sufficient to have suitable predefined information, which allows to directly deduce or estimate the time instances when the exposure of the first subset P₁ is finished in the first frame period F₁ and when the second subset P₂ of rows begins to be exposed in the second frame period F₂.

In some implementations, the imager 10 may also provide a vertical and horizontal synchronization signal to the at least one control unit 13a, 13b. The horizontal synchronization signal, also denoted as HSYNC, is output whenever a row has been fully exposed and read out and the vertical synchronization signal, which is also denoted as VSYNC, is output whenever all rows of the plurality of rows P have been exposed.

In Step S3 the at least one control unit 13a, 13b may compute from predefined focal settings for the first and/or second frame period F₁, F₂, which may for example be obtained from a focal setting logic 14 of the camera 3, how the at least one focal parameter should be adjusted to achieve the desired settings. In step S4, the adjustments may optionally be split into a plurality of smaller adjustments in some implementations. The adjustment control signals are then provided to the focal adjustment arrangement 12, which adjusts the at least one focal parameter accordingly during the focal adjustment Tₐ. The at least one control unit 13a, 13b may also provide one or more feedback signals to the focal setting logic 14 providing for example the current focal setting and/or an information signal that a certain focal adjustment has taken place.

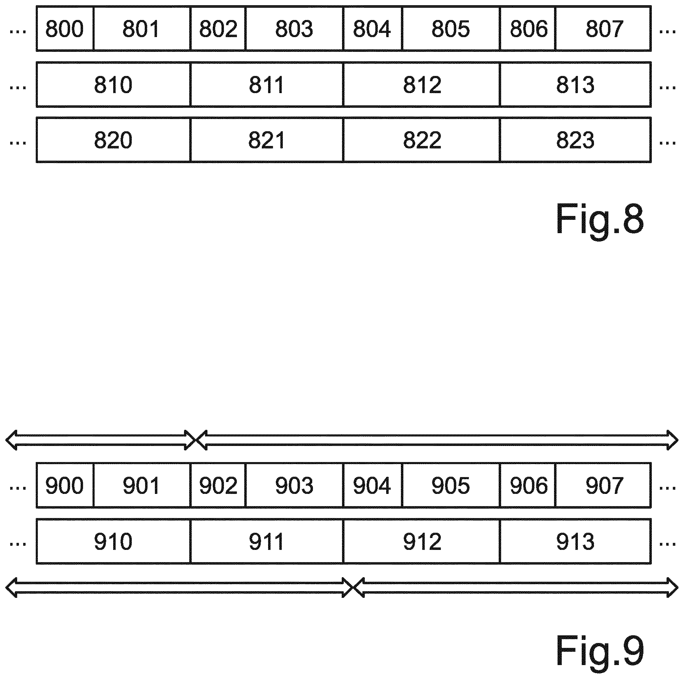

In Fig. 8 to Fig. 11, different use cases are depicted as schematic flow diagrams, wherein the direction of time is from left to right.

Fig. 8 shows a basic example, wherein the first line corresponds to the steps of image capturing, the second line corresponds to a human vision, HV, function and the third line corresponds to a computer vision, CV, function. In block 800, parameters including the at least one focal parameter are set for the required ROIs 6a, 6b, 6c, 7a, 7b, 7c for a frame n. In case more than one ROI is relevant, common focal parameters may be used. In block 801, the respective raw image including the required ROIs 6a, 6b, 6c, 7a, 7b, 7c is captured for frame n. In block 802, the parameters are set for the required ROIs 6a, 6b, 6c, 7a, 7b, 7c for a frame n+1. In block 803, the respective raw image including the required ROIs 6a, 6b, 6c, 7a, 7b, 7c is captured for frame n+1. In block 804, the parameters are set for the required ROIs 6a, 6b, 6c, 7a, 7b, 7c for a frame n+2. In block 805, the respective raw image including the required ROIs 6a, 6b, 6c, 7a, 7b, 7c is captured for frame n+2. In block 806, the parameters are set for the required ROIs 6a, 6b, 6c, 7a, 7b, 7c for a frame n+3. In block 807, the respective raw image including the required ROIs 6a, 6b, 6c, 7a, 7b, 7c is captured for frame n+3.

In block 810, the output for the HV function is updated based on the capture of a frame n-1 and in block 820, the output for the CV function is updated based on the capture of frame n-1. In block 811, the output for the HV function is updated based on the capture of frame n and in block 821, the output for the CV function is updated based on the capture of frame n-1. In block 812, the output for the HV function is updated based on the capture of frame n+1 and in block 822, the output for the CV function is updated based on the capture of frame n+1. In block 813, the output for the HV function is updated based on the capture of a frame n+2 and in block 823, the output for the CV function is updated based on the capture of frame n+2.

Fig. 9 shows a further example for handling a transition a HV function from one output view to another, wherein each output view requires a different parameter set including the at least one focal parameter. The transition between parameter sets happens immediately.

In block 900, parameters including the at least one focal parameter are set for the ROIs 6a, 6b, 6c, 7a, 7b, 7c for a frame n, specifically for a view m. In block 901, the respective raw image including the required ROIs 6a, 6b, 6c, 7a, 7b, 7c is captured for frame n. In block 900, the parameters are set for the ROIs 6a, 6b, 6c, 7a, 7b, 7c for a frame n+1, specifically for a view m+1. In block 901, the respective raw image including the required ROIs 6a, 6b, 6c, 7a, 7b, 7c is captured for frame n+1. In block 904, the parameters are set for the ROIs 6a, 6b, 6c, 7a, 7b, 7c for a frame n+2, specifically for view m+1. In block 905, the respective raw image including the required ROIs 6a, 6b, 6c, 7a, 7b, 7c is captured for frame n+2. In block 906, the parameters are set for the ROIs 6a, 6b, 6c, 7a, 7b, 7c for a frame n+3, specifically for view m+1. In block 907, the respective raw image including the required ROIs 6a, 6b, 6c, 7a, 7b, 7c is captured for frame n+3.

In block 910, the output for the HV function is updated based on the capture of a frame n-1 and view m. In block 911, the output for the HV function is updated based on the capture of frame n and view m. In block 912, the output for the HV function is updated based on the capture of frame n+1 and view m+1. In block 913, the output for the HV function is updated based on the capture of a frame n+2 and view m+1.

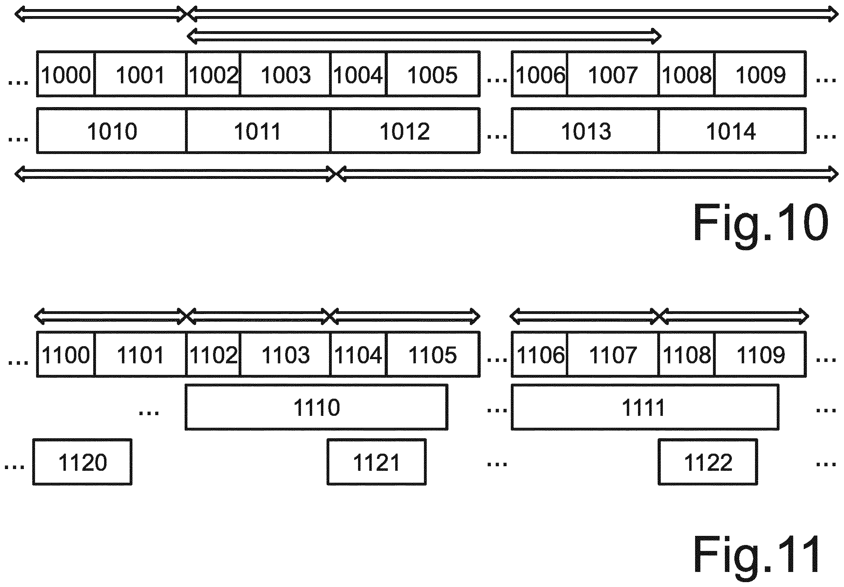

Fig. 10 shows a further example for handling a transition in an HV function from one output view to another, where each output view requires a different parameter set including the at least one focal parameter. The transition between parameter sets happens gradually, that is over several frames.

In block 1000, parameters including the at least one focal parameter are set for the ROIs 6a, 6b, 6c, 7a, 7b, 7c for a frame n, specifically for a view m. In block 1001, the respective raw image including the required ROIs 6a, 6b, 6c, 7a, 7b, 7c is captured for frame n. In block 1002, the parameters are partially adapted towards a view m+1 for the ROIs 6a, 6b, 6c, 7a, 7b, 7c for a frame n+1. In block 1003, the respective raw image including the required ROIs 6a, 6b, 6c, 7a, 7b, 7c is captured for frame n+1. In block 1004, the parameters are further partially adapted towards view m+1 for the ROIs 6a, 6b, 6c, 7a, 7b, 7c for a frame n+2. In block 1005, the respective raw image including the required ROIs 6a, 6b, 6c, 7a, 7b, 7c is captured for frame n+2. In block 1006, the parameters are further partially adapted towards view m+1 for the ROIs 6a, 6b, 6c, 7a, 7b, 7c for a frame n+x, wherein x>2. In block 1007, the respective raw image including the required ROIs 6a, 6b, 6c, 7a, 7b, 7c is captured for frame n+x. In block 1008, the parameters are finally set for view m+1 for the ROIs 6a, 6b, 6c, 7a, 7b, 7c for a frame n+x+1. In block 1009, the respective raw image including the required ROIs 6a, 6b, 6c, 7a, 7b, 7c is captured for frame n+x+1.

In block 1010, the output for the HV function is updated based on the capture of a frame n-1 and view m. In block 1011, the output for the HV function is updated based on the capture of frame n and view m. In block 1012, the output for the HV function is updated based on the capture of frame n+1 and view m+1. In block 1013, the output for the HV function is updated based on the capture of frame n+x-1 and view m+1. In block 1013, the output for the HV function is updated based on the capture of frame n+x and view m+1.

Fig. 11 shows a further example for handling a seamless toggling between two computer CV functions, CV1 and CV2, where each CV function requires its own parameter set including the at least one focal parameter.

In block 1100, parameters including the at least one focal parameter are set for the required ROIs 6a, 6b, 6c, 7a, 7b, 7c for a frame n according to the requirements of CV1. In block 1101, the respective raw image including the required ROIs 6a, 6b, 6c, 7a, 7b, 7c is captured for frame n. In block 1102, the parameters are set for the required ROIs 6a, 6b, 6c, 7a, 7b, 7c for frame n+1 according to the requirements of CV2. In block 1103, the respective raw image including the required ROIs 6a, 6b, 6c, 7a, 7b, 7c is captured for frame n+1. In block 1104, the parameters are set for the required ROIs 6a, 6b, 6c, 7a, 7b, 7c for frame n+2 according to the requirements of CV1. In block 1105, the respective raw image including the required ROIs 6a, 6b, 6c, 7a, 7b, 7c is captured for frame n+2. In block 1106, the parameters are set for the required ROIs 6a, 6b, 6c, 7a, 7b, 7c for frame n+x, wherein x>2, according to the requirements of CV2. In block 1107, the respective raw image including the required ROIs 6a, 6b, 6c, 7a, 7b, 7c is captured for frame n+x. In block 1108, the parameters are set for the required ROIs 6a, 6b, 6c, 7a, 7b, 7c for frame n+x+1 according to the requirements of CV1. In block 1105, the respective raw image including the required ROIs 6a, 6b, 6c, 7a, 7b, 7c is captured for frame n+x+1.

In block 1110, the output for CV1 is updated based on the capture of frame n. In block 1120, the output for CV2 is updated based on the capture of a frame n-1. In block 1111, the output for CV1 is updated based on the capture of frame n+x-1. In block 1121, the output for CV2 is updated based on the capture of frame n+1. In block 1122, the output for CV2 is updated based on the capture of frame n+x.

As described, in particular with respect to the figures, the invention provides a method for focal adjustment of an automotive camera operating in a rolling shutter mode, wherein negative effects of the focal adjustment on the captured images are avoided at least for a part of the images.

For example, focal adjustment may be treated as a background activity with no impact on the foreground activity, i.e. capture of the predefined frame-specific ROls. Frame-to-frame variations including variations in the frame-rate, exposure period and ROI may be taken into account. Image Quality control can for example take place on frame boundaries using standard mechanisms provided by the imager, for example group sets of imager register settings. ROI variation may for example occur due to a planned change when the view perspective of a human vision function changes, a cyclic change of ROI to support multitasking of parallel human vision and/or computer vision functions, or a dynamic adaptation of ROIs for image stabilization.

In several implementations, the invention maximizes the operating window for focal adjustment, for example by increasing the opportunity that an adjustment can occur in a single frame-to-frame transition and/or by minimizing the number of frame-to-frame adjustments required to complete a larger focus adjustment that cannot complete in a single frame-to-frame transition. Both factors are beneficial to the operation of a focus control loop.

Overall the focal adjustment may become more predictable, which also assists focus control. As these adjustments take place in the background, especially on frame boundaries, when critical rows of the sensor array are not being exposed, a large focus adjustment can intentionally be broken down in a sequence of smaller sequential adjustments, if that is beneficial.

For computing the focal adjustment period, in several implementations, row-specific exposure periods can be determined in different ways. For example, the imager may indicate the exposure periods at row level or frame level and/or the exposure can be controlled or triggered at frame level and/or the exposure period of the specific rows can be calculated or at least estimated with high accuracy.

The available time for focal adjustment may be maximized in several implementations, ensuring at the same time that focal adjustment does not occur during exposure of the rows, which correspond to the predefined ROI, and therefore will not impact the exposure of the ROI.

In several implementations, also a settling time of the focal adjustment arrangement can be taken into account. For example, for each adjustment of focus, a settling time may be specified. That specification may include a predetermined settling time for each motion of the focal adjustment arrangement, taking into account environmental and lifetime factors. This may be based on a parameterized formula and/or a look-up table. The specification may include, alternatively or in addition, an online learnt element based on historical monitoring of settling time and/or a safety margin, which can be designed to account for inaccuracies in other elements of the characterization.

## Claims

1. Method for focal adjustment of an automotive camera (3), wherein a first image is captured by an imager (10) of the camera (3) during a first frame period (F₁), wherein a plurality of rows (P) of a sensor array (11) of the imager (10) is exposed according to a rolling shutter mode, and a second image is captured by the imager (10) during a second frame period (F₂) after the first frame period (F₁), **characterized in that**
- a first area on the sensor array (11) is determined, which corresponds to a predefined region of interest (6a, 6b, 6c, 7a, 7b, 7c) for the first frame period (F₁);
- a first subset (P₁) of the plurality of rows (P) is determined, wherein the first subset of rows (P₁) contains the first area;
- a focal adjustment period (Tₐ) is determined, which starts when or after all rows of the first subset of rows (P₁) have been exposed during the first frame period (F₁); and
- at least one focal parameter of the camera (3) is adjusted during the focal adjustment period (Tₐ) according to a predefined focal setting for capturing the second image.

2. Method according to claim 1,
**characterized in that**
- for capturing the second image the plurality of rows (P) is exposed according to the rolling shutter mode;
- a second area on the sensor array (11) is determined, which corresponds to a predefined region of interest (6a, 6b, 6c, 7a, 7b, 7c) for the second frame period (F₂); and
- the focal adjustment period (Tₐ) is determined depending on the second area.

3. Method according to claim 2,
**characterized in that**
if the second area is identical to the first area, the focal adjustment period (Tₐ) ends before an exposure of any of the first subset of rows (P₁) for capturing the second image during the second frame period (F₂) has started.

4. Method according to claim 3,
**characterized in that**
a time difference (T_{b}) between the end of the focal adjustment period (Tₐ) and a start of exposure of the first subset of rows (P₁) during the second frame period (F₂) is equal to or greater than a predefined non-zero buffer period.

5. Method according to claim 2,
**characterized in that**
if the second area is different from the first area
- a second subset (P₂) of the plurality of rows (P) is determined, wherein the second subset of rows (P₂) contains the second area; and
- the focal adjustment period (Tₐ) ends before any of the second subset of rows (P₂) is exposed during the second frame period (F₂).

6. Method according to claim 5,
**characterized in that**
a time difference (T_{b}) between the end of the focal adjustment period (Tₐ) and a start of exposure of the second subset of rows (P₂) is equal to or greater than a predefined non-zero buffer period.

7. Method according to one of the preceding claims,
**characterized in that**
the first subset of rows (P₁) corresponds to a minimal set of rows of the plurality of rows (P) containing the first area.

8. Method according to one of the preceding claims,
**characterized in that**
- adjusting the at least one focal parameter comprises changing a distance between the sensor array (11) and a lens unit (9) of the camera (3); or
- adjusting the at least one focal parameter comprises changing a focal length of a lens unit (9) of the camera (3).

9. Method according to one of the preceding claims,
**characterized in that**
the focal adjustment period (Tₐ) is determined such that it starts before all rows of the plurality of rows (P) have been exposed during the first frame period (F₁).

10. Method for guiding a vehicle (1) at least in part automatically, wherein
- a method for focal adjustment of an automotive camera (3) of the vehicle (1) is carried out according to one of the preceding claims; and
- the vehicle (1) is guided at least in part automatically depending on the first image and/or the second image.

11. Automotive camera (3) comprising an imager (10) and
- at least one control unit (13a, 13b), which is configured to control the imager (10) to capture a first image during a first frame period (F₁), wherein a plurality of rows (P) of a sensor array (11) of the imager (10) is exposed according to a rolling shutter mode, and to capture a second image during a second frame period (F₂) after the first frame period (F₁); and
- a focal adjustment arrangement (12), which is configured to adjust at least one focal parameter of the camera (3);
**characterized in that**
the at least one control unit (13a, 13b) is configured to
- determine a first area on the sensor array (11), which corresponds to a predefined region of interest (6a, 6b, 6c, 7a, 7b, 7c) for the first frame period (F₁);
- determine a first subset (P₁) of the plurality of rows (P), wherein the first subset of rows (P₁) contains the first area;
- determine a focal adjustment period (Tₐ), which starts when or after all rows of the first subset of rows (P₁) have been exposed during the first frame period (F₁); and
- control the focal adjustment arrangement (12) to adjust the at least one focal parameter of the camera (3) during the focal adjustment period (Tₐ) according to a predefined focal setting for capturing the second image.

12. Automotive camera (3) according to claim 11,
**characterized in that**
the focal adjustment arrangement (12) is configured to move the sensor array (11) relative to a lens unit (9) of the camera (3) to adjust the at least one focal parameter.

13. Automotive camera (3) according to claim 11,
**characterized in that**
the focal adjustment arrangement (12) is configured to change a focal length of a lens unit (9) of the camera (3) to adjust the at least one focal parameter.

14. Electronic vehicle guidance system (2) for a vehicle (1) comprising an automotive camera (3) according to one of claims 11 to 13 and a further control unit (4), which is configured to generate one or more control signals for guiding the vehicle (1) at least in part automatically depending on the first image and/or the second image.

15. Computer program product comprising instructions, which
- when executed by an automotive camera (3) according to one of claims 11 to 13, cause the automotive camera (3) to carry out a method according to one of claims 1 to 9; or
- when executed by an electronic vehicle guidance system (2) according to claim 14, cause the electronic vehicle guidance system (2) to carry out a method according to claim 10.
